# EUROPEAN PATENT SPECIFICATION

(11) **EP 2 740 918 B1**
(45) Date of publication and mention of the grant of the patent: **10.05.2017**
(21) Application number: 12195890.4
(22) Date of filing: 06.12.2012
(51) Int. Cl.: F02D 19/06, F02D 19/08, F02D 19/10

(54) **Method and control system for a dual fuel engine**
Verfahren und Steuersystem für Zweistoffmotoren
Procédé et système de commande pour moteur à double combustible

(43) Date of publication of application: 11.06.2014
(73) Proprietor: Caterpillar Motoren GmbH & Co. KG, 24159 Kiel (DE)
(72) Inventor: Tuexen, Thorsten, 24214 Gettorf (DE); Sixel, Eike Joachim, 24109 Kiel (DE); Rebelein, Werner, 24159 Kiel (DE); Bleyer, Benjamin, 24159 Kiel (DE); Uslu, Fuat, 24146 Kiel (DE); Vogler, Finn, 23611 Bad Schwartau (DE)
(74) Representative: BRP Renaud & Partner mbB Rechtsanwälte Patentanwälte Steuerberater

(56) References cited:
- US-A- 5 868 121

## Description

### Technical Field

The present disclosure generally relates to dual fuel internal combustion engines, and more particularly to a control system and method for operating a dual fuel internal combustion engine.

### Background

Dual fuel internal combustion engines can typically operate in a liquid fuel mode (LFM) and in a gaseous fuel mode (GFM). In LFM, a liquid fuel, such as diesel fuel, is injected directly into an engine cylinder or a pre-combustion chamber as the sole source of energy during combustion. In GFM, a gaseous fuel such as natural gas is mixed with compressed charge air in an intake port of a cylinder and a small amount of liquid fuel is injected into the cylinder or the pre-combustion chamber to ignite the mixture of air and gaseous fuel. For example, US Patent No. 5,868,121 discloses a dual fuel internal combustion engine.

In such dual fuel internal combustion engines, one or more of such gaseous fuel admission valves are positioned between a source of gaseous fuel and individual inlet ports of each cylinder of the engine. When the gaseous fuel admission valves are opened in GFM, the gaseous fuel passes into individual inlet ports for mixing with compressed charge air. Such gaseous fuel admission valves may also be utilized in spark-ignited engines.

If GFM is not activated, the gaseous fuel supply lines of the dual fuel internal combustion engine should be free of gaseous fuel due to safety concerns. Therefore, a venting line is typically connected to the gaseous fuel system to vent off remaining gaseous fuel from the gaseous fuel supply lines to the environment.

The present disclosure is directed, at least in part, to improving or overcoming one or more aspects of prior systems.

### Summary of the Disclosure

In one aspect, a method for operating a dual fuel internal combustion engine having a gaseous fuel system and configured to operate in a gaseous fuel mode and a liquid fuel mode is disclosed. The method may comprise operating the dual fuel internal combustion engine in the gaseous fuel mode by supplying gaseous fuel to charge air at cylinder specific charge air/gaseous fuel mixing zones, thereby forming a cylinder specific charge air/gaseous fuel mixture. The method may further comprise stopping supply of gaseous fuel to the cylinder specific charge air/gaseous fuel mixing zones, releasing remaining gaseous fuel from the gaseous fuel system to the charge air upstream of the cylinder specific charge air/gaseous fuel mixing zones, thereby forming a charge air/gaseous fuel release mixture, supplying a pressurized inert gas to the gaseous fuel system to cause remaining gaseous fuel from gaseous fuel system to flow into the charge air and combusting the charge air/gaseous fuel release mixture with liquid fuel.

In another aspect, a control system for a dual fuel internal combustion engine configured to operate in a liquid fuel mode and in a gaseous fuel mode, the dual fuel internal combustion engine comprising a gaseous fuel system and a charge air system is disclosed. The control system may comprise a release line for fluidly connecting the gaseous fuel system to the charge air system, a release valve unit in the release line; and a control unit connected to the release valve unit and configured to open the release valve unit when receiving information that the gaseous fuel mode is stopped such that remaining gaseous fuel from the gaseous fuel system is releasable via the release line into the charge air in the charge air system and connected to the inert gas valve and configured to control operation of the inert gas valve.

In yet another aspect, a dual fuel internal combustion engine configured to operate in a liquid fuel mode and in a gaseous fuel mode is disclosed. The dual fuel internal combustion engine may comprise at least one cylinder, each cylinder comprising an inlet port. The dual fuel internal combustion engine may further comprise a gaseous fuel system fluidly connected to each inlet port via a gaseous fuel admission valve, a charge air system fluidly connected to each inlet port, and a control system with a release line, a release valve unit and a control unit as exemplary disclosed herein, wherein the release line fluidly connects the gaseous fuel system to the charge air system.

Other features and aspects of this disclosure will be apparent from the following description and the accompanying drawings.

### Brief Description of the Drawings

Fig. 1 shows a schematic drawing of an exemplary dual fuel internal combustion engine;
Fig. 2 schematic drawing of an exemplary dual fuel internal combustion engine with a control system;
Fig. 3 schematic drawing of another exemplary dual fuel internal combustion engine with a control system;
Fig. 4 schematic drawing of yet another exemplary dual fuel internal combustion engine with a control system;
Fig. 5 schematic drawing of yet another further exemplary dual fuel internal combustion engine with a control system
Fig. 6 shows an exemplary release valve unit; and
Fig. 7 shows a schematic diagram of an exemplary dual fuel internal combustion engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that instead of releasing remaining gaseous fuel from the gaseous fuel supply lines to the environment, the remaining fuel may be further used to power the dual fuel internal combustion engine. Thereby, an environment-friendly solution may be provided which may reduce emission of greenhouse gases, namely gaseous fuel such as natural gas.

Accordingly, a control system and a method for operating a dual fuel internal combustion engine are disclosed which allow releasing of remaining gaseous fuel into a charge air system of the dual fuel internal combustion engine for further combustion.

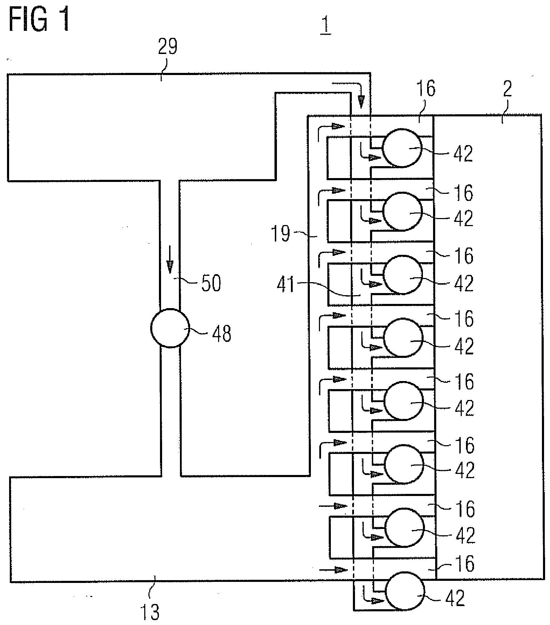

Referring to Fig. 1, a schematic diagram of an exemplary dual fuel internal combustion engine 1 including an engine block 2, a charge air system 13, and a gaseous fuel system 29 is shown to illustrate an aspect of the present disclosure.

In the shown configuration, dual fuel internal combustion engine 1 is adapted as an eight cylinder engine. As is described in greater detail later on, dual fuel internal combustion engine 1 may have a different configuration.

A charge air manifold 19 fluidly connects charge air system 13 to cylinders (not shown) in engine block 2 via individual inlet ports 16. A gaseous fuel manifold 41 fluidly connects gaseous fuel system 29 via individual gaseous fuel admission valves 42 to individual inlet ports 16.

A release line 50 fluidly connects gaseous fuel system 29 to charge air system 13. To allow or to block flow via release line 50, a release valve unit 48 is provided in release line 50.

Hereinafter, some exemplary embodiments are disclosed. Each embodiment comprises a separate line for releasing gaseous fuel from gaseous fuel system 29 to charge air system 13, namely aforementioned release line 50 with release valve unit 48. Separate line means a new line which fluidly connects gaseous fuel system 29 to charge air system 13 beside the fluid connection close to engine block 2 by individual gaseous fuel admission valves 42 dosing gaseous fuel from gaseous fuel manifold 41 into charge air in individual inlet ports 16. In other words, release line 50 is fluidly connected to a portion of charge air system 13 prior splitting of the charge air flow into a plurality of charge air flows such as individual charge air flows in individual inlet ports 16 of each cylinder.

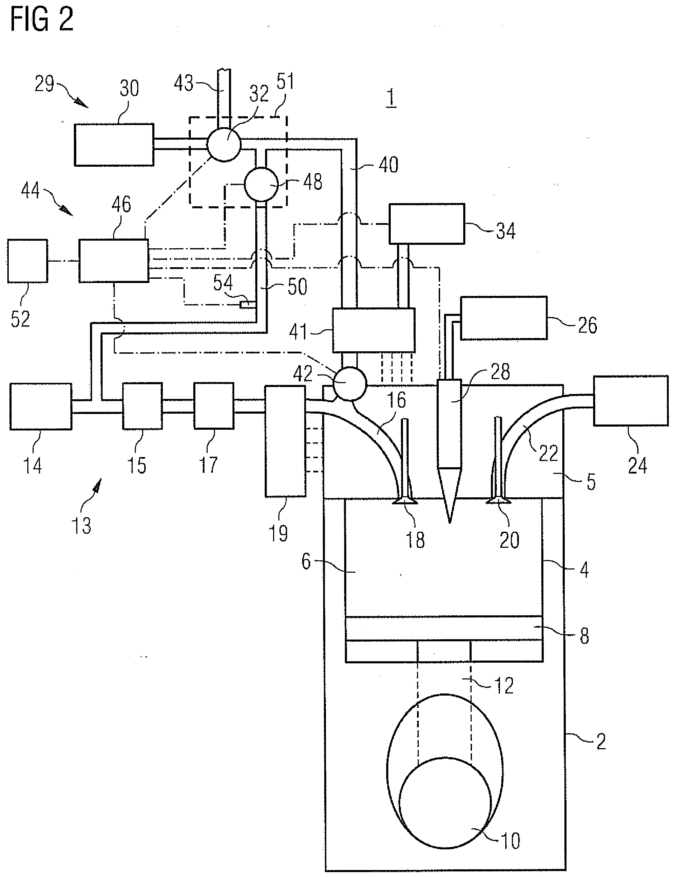

Referring to Fig. 2, a schematic diagram of an exemplary dual fuel internal combustion engine 1 including engine unit, charge air system 13, an exhaust system, a liquid fuel system, and gaseous fuel system 29 is shown.

The engine unit comprises an engine block 2, at least one cylinder 4 providing at least one combustion chamber 6 for combusting fuel, a piston 8, a crankshaft 10 drivingly coupled to the piston 8 via a piston rod 12. Cylinder 4 is covered by a cylinder head 5, for example, a single-cylinder cylinder head covering one cylinder or a multi-cylinder cylinder head covering more than one cylinder.

Piston 8 is configured to reciprocate within cylinder 4. The at least one cylinder 4 may be arranged, for example, in an inline V, W, or any other known configuration.

Charge air system 13 comprises an air intake 14, a compressor 15 of a one stage or two stage turbocharger (not shown), a charge air cooler 17, a charge air manifold 19, an inlet port 16, and an inlet valve 18. Air intake 14 is fluidly connected to compressor 15 which in turn is fluidly connected to charge air cooler 17. Compressor 15 is adapted to compress charge air from air intake 14 which guides uncompressed charge air to compressor 15 during operation.

Charge air manifold 19 is fluidly interconnected between charge air cooler 17 and inlet port 16. Specifically, charge air manifold 19 acts as a charge air distributor splitting a common charge air pipe into individual inlet ports 16 of each cylinder 4 (as indicated by the dashed lines in Fig. 2). In other configurations, more than one charge air manifold may be used.

Inlet valve 18 is arranged in inlet port 16, and is adapted to allow or to block flow into combustion chamber 6.

The exhaust system comprises an outlet valve 20, an outlet port 22, and an exhaust gas system 24. Exhaust gas system 24 is fluidly connected to the at least one combustion chamber 6 via outlet port 22. Outlet valve 20 is arranged within cylinder head 5 and adapted to allow or to block flow of exhaust gas from combustion chamber 6 into outlet port 22.Additionally, exhaust gas system 24 may comprise at least one of an exhaust gas recirculation system, and/or an exhaust gas aftertreatment system, for example, an exhaust gas silencer, a particle filter, an oxidation catalyst, and/or a SCR catalyst.

Exhaust gas system 24 may comprise a turbine being drivingly coupled to compressor 15 of charge air system 13, together forming a turbocharger. In addition, exhaust gas system 24 may further comprise an additional turbine which may form together with an additional compressor of charge air system 13 a two stage turbocharger.

In some embodiments, inlet port 16, and/or outlet port 22 may comprise an additional limb having an additional inlet valve or outlet valve, respectively.

The liquid fuel system includes a liquid fuel tank unit 26 and a liquid fuel injection system 28 fluidly connected to liquid fuel tank unit 26. Liquid fuel tank unit 26 may comprise a first liquid fuel tank for storing a first liquid fuel, for example HFO, and a second liquid fuel tank for storing a second liquid fuel, for example, diesel fuel.

Liquid fuel injection system 28 includes a fuel injector for injecting liquid fuel into combustion chamber 6. Additionally, liquid fuel injection system 28 may include a second fuel injector (not shown), for example, for injection of ignition fuel in GFM into combustion chamber 6.

Gaseous fuel system 29 comprises a gaseous fuel source 30, a gas valve unit 32, a pressurised inert gas system 34, a gaseous fuel line 40, a gaseous fuel manifold 41, and at least one gaseous fuel admission valve 42.

Gaseous fuel source 30 comprises a gaseous fuel tank containing a gaseous fuel such as natural gas for combustion in GFM.

Gas valve unit 32 is adapted to allow, to block and to control flow from gaseous fuel source 30 into gaseous fuel line 40. Therefore, gas valve unit 32 may comprise a control valve, a shut-off valve, and a venting valve. The control valve may be adapted to adjust flow of gaseous fuel from gaseous fuel source 30 into gaseous fuel line 40. The shut-off valve may be adapted to instantaneously allow or block flow of gaseous fuel from gaseous fuel source 30. The venting valve may be adapted to release left gaseous fuel within gaseous fuel line 40 into venting line 43.

Venting line 43 may guide fluid from gas valve unit 32 and gaseous fuel line 40 to the environment. Additionally, gas valve unit 32 may further comprise additional components such as a second shut-off valve arranged in series with a first shut-off valve due to safety concerns.

Pressurised inert gas system 34 is fluidly connected to gaseous fuel line 40 via gaseous fuel manifold 41 and may comprise a shut-off valve and an inert gas tank containing a pressurised inert gas, for example, nitrogen. Additionally, pressurised inert gas system 34 may further comprise a compressor for pressurising the inert gas, for example, prior filling into the inert gas tank of the pressurised inert gas system 34.The shut-off valve of pressurised inert gas system 34 is adapted to allow or to block flow of pressurised inert gas from pressurised inert gas system 34 into gaseous fuel line 40. In other configurations, pressurised inert gas system 34 may have additional or alternative fluid connections to gaseous fuel line 40, gaseous fuel manifold 41, gas valve unit 32, and/or a release line 50.

Gaseous fuel manifold 41 fluidly interconnects gaseous fuel line 40 to at least one gaseous fuel admission valve 42. Specifically, Gaseous fuel manifold 41 splits common gaseous fuel line 40 into individual gaseous fuel lines, each being connected to an individual gaseous fuel admission valve 42 (as indicated in Fig. 2 by dashed lines connecting gaseous fuel manifold 41 via separate lines to the cylinders of dual fuel internal combustion engine 1). In some configurations, dual fuel internal combustion engine 1 may comprise more than one gaseous fuel manifold 41.

Gaseous fuel admission valve 42 is adapted to allow or to block flow of gaseous fuel into an individual inlet port 16 in each cylinder 4 to mix with compressed charge air from charge air system 13 in GFM if gaseous fuel is supplied by gaseous fuel source 30 and gas valve unit 32 allows flow of gaseous fuel from gaseous fuel source 30 into gaseous fuel line 40. Thus, cylinder specific mixing zones downstream of each gaseous fuel admission valve 42 are generated, which are hereinafter referred to as cylinder specific charge air/gaseous fuel mixing zones. For example, gaseous fuel admission valve 42 may be a solenoid actuated plate valve in which springs hold a lower surface of a movable disk against an upper surface of a stationary disk or plate, the two surfaces being configured to provide a sealed relationship in a closed state of gaseous fuel admission valve 42.

Control system 44 comprises a control unit 46, a release valve unit 48, and release line 50. Control unit 46 is connected to release valve unit 48 and configured to open or to close release valve unit 48. Release valve unit 48 is installed in release line 50.

In the shown configuration, release line 50 fluidly interconnects gaseous fuel line 40 of gaseous fuel system 29 to a charge air line of charge air system 13 upstream of compressor 15. For example, release line 50 may open in an intake duct of compressor 15. Thus, a mixture is formed upstream of the cylinder specific charge air/gaseous fuel mixing zones, which is hereinafter referred to as charge air/gaseous fuel release mixture. Alternatively, release line 50 may be connected at other locations of gaseous fuel system 29, for example, at gas valve unit 32. In a configuration comprising a two stage turbocharger with a first and second compressor, release line may either open in a charge air line upstream of both compressors, or may open in a charge air line fluidly connecting the first compressor and second compressor.

As can be seen in Fig. 2, release line 50 may be connected in a section of gaseous fuel line 40 which directly follows downstream of gas valve unit 32. Thus, if GFM is stopped and pressurised inert gas system 34 supplies a pressurised inert gas to gaseous fuel line 40, for example, via gaseous fuel manifold 41, the pressurised inert gas may cause a majority of remaining gaseous fuel in gaseous fuel line 40 (and gaseous fuel manifold 41) to flow into charge air system 13 via release line 50 as is described in greater detail later on.

One skilled in the art will appreciate that depending on the arrangement of pressurised inert gas system 34, other locations of fluid connections between gaseous fuel line 40 and release line 50 may be used to facilitate release of a majority of remaining gaseous fuel via release line 50 into charge air system 13 if GFM is stopped.

Furthermore, gas valve unit 32 and release valve unit 48 may together form a gas valve unit arrangement 51 which may be, for example, arranged together in a single module being separately arranged from engine block 2 and charge air system 13. The module may be then fluidly connected via gaseous fuel line 40 to gaseous fuel manifold 41, and via release line 50 to charge air system 13.

Additionally, a timer 52, and/or at least one gas concentration sensor 54 may be connected to control unit 46. Timer 52 may be configured to provide a control signal to control unit 46 if a preset time is elapsed since control unit 46 provided a start signal to timer 52. Gas concentration sensor 54 may be attached to, for example, gaseous fuel line 40, release line 50, a charge air line downstream of a release inlet from release line 50, charge air manifold 19, or inlet port 16. Further, gas concentration sensor 54 may be configured to measure a gas component concentration of passing gas. For example, gas concentration sensor 54 may be configured to measure a gaseous fuel concentration, an inert gas concentration, or a charge air concentration.

As indicated by dashed dotted lines in Fig.2, control unit 46 may be further connected to and configured to control operation of gas valve unit 32, inert gas valve 36, gaseous fuel admission valve 42, liquid fuel injection system 28, and/or other components of dual fuel internal combustion engine 1, for example, a speed governor (not shown) controlling engine speed of dual fuel internal combustion engine 1.

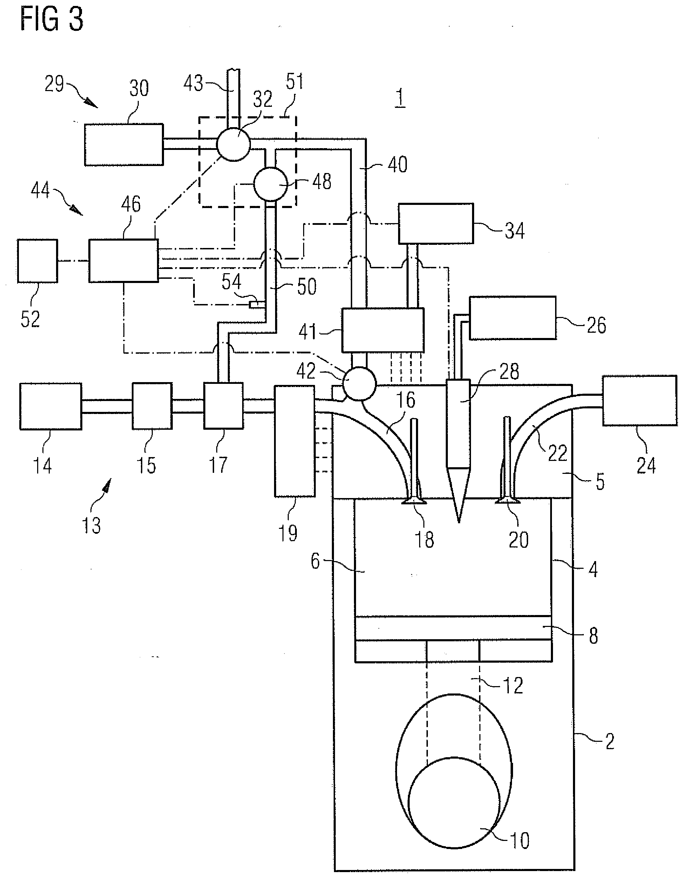

Referring now to Fig. 3, an exemplary schematic diagram of a dual fuel internal combustion engine 1 is shown that is similar to dual fuel internal combustion engine 1 of Fig. 2, except the components described in the following.

Release line 50 is fluidly interconnected between gaseous fuel line 40 and a charge air cooler 17 downstream of compressor 15 and upstream of charge air manifold 19. In a configuration comprising a two stage turbocharger with a first and second compressor, release line 50 may open in a charge air line downstream of both compressors.

In this configuration, charge air cooler 17 may have an additional release inlet for connection of release line 50 beside a charge air inlet for connection of a charge air line guiding compressed charge air from compressor 15.

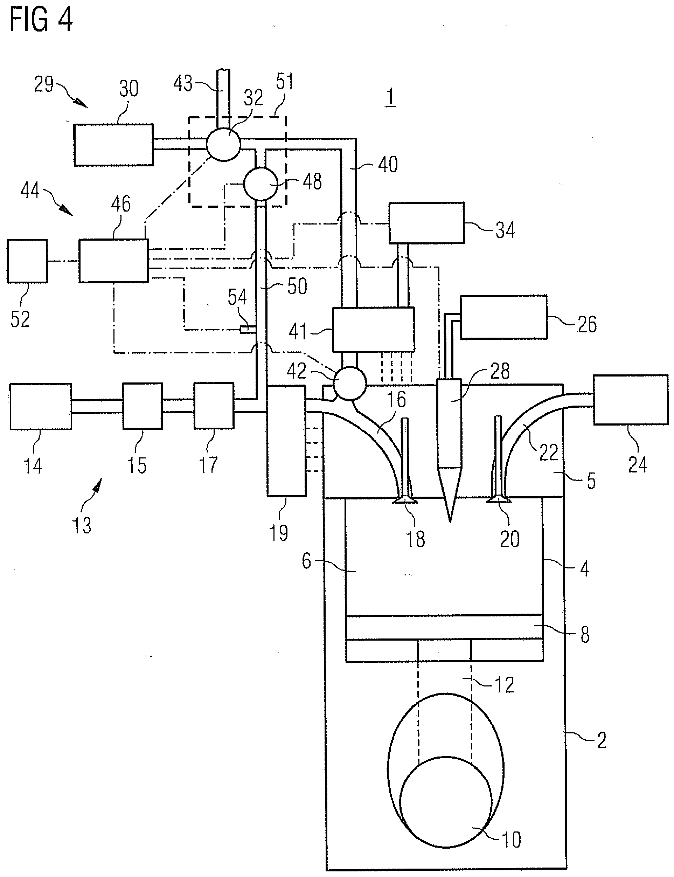

With reference Fig. 4, an exemplary schematic diagram of a dual fuel internal combustion engine 1 is shown that is similar to dual fuel internal combustion engine 1 of Fig. 2, except the components described in the following.

Release line 50 is fluidly interconnected between gaseous fuel line 40 and charge air manifold 19 downstream of charge air cooler 17. In this configuration, charge air manifold 19 may have an additional release inlet for connection of release line 50. The release inlet may be disposed in a section of charge air manifold 19 prior splitting of a common charge air line into individual branches.

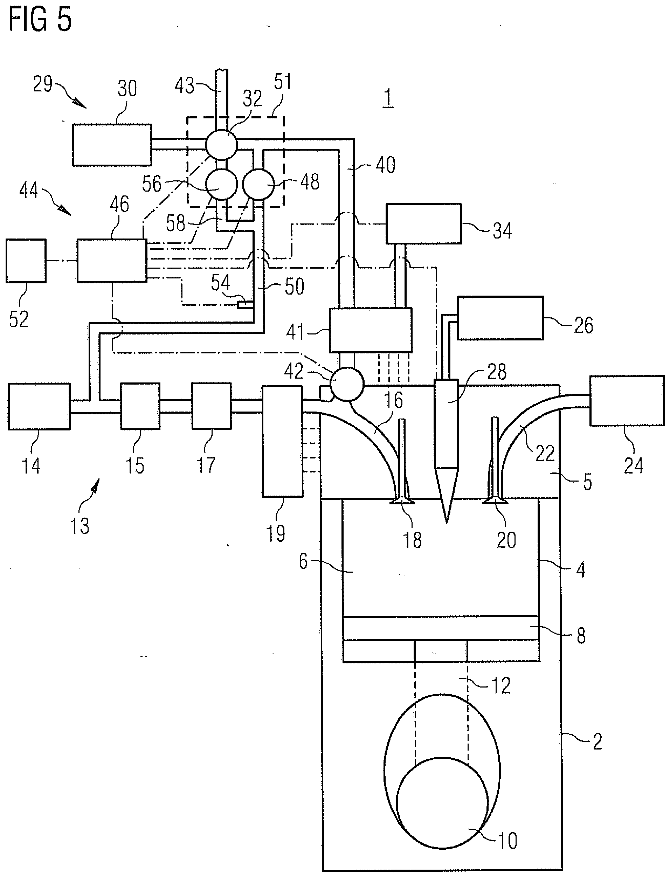

Referring now to Fig. 5, an exemplary schematic diagram of a dual fuel internal combustion engine 1 that is similar to dual fuel internal combustion engine 1 of Fig. 2, except the components described in the following.

In this configuration, control system 44 comprises an additional release line 58 fluidly connecting gas valve unit 32 and release line 50. Control system 44 further comprises an additional release valve unit 56 installed in the additional release line 58. As described above in connection with Fig. 2, gas valve unit 32 may comprise various fluidly interconnected valves such as shut-off valves and control valves. Similar to release valve unit 48, additional release valve unit 56 is connected to control unit 46 via a control connection line (as indicated by the dashed dotted line in Fig. 5). It should be appreciated that additional release line 58 may be alternatively connected directly charge air system 13 as described in connection with release line 50 in Figs. 2 to 4. For example, additional release line 58 may be directly connected to an inlet of charge air cooler 17.

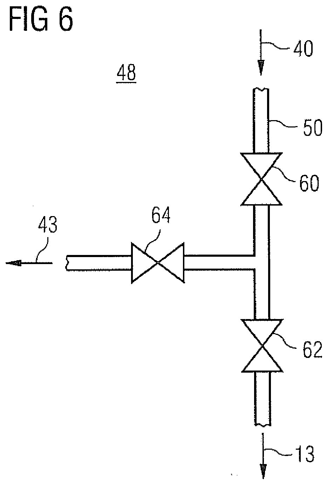

Turning to Fig. 6, an exemplary embodiment of a release valve unit is shown in a schematic diagram.

In the shown configuration, release valve unit 48 is configured as a so-called double block and bleed valve. The double block and bleed valve comprises a first normally closed shut-off valve 60, a second normally closed shut-off valve 62, and a normally opened bleed valve 64.

First normally closed shut-off valve 60 is fluidly connected to the gaseous fuel line 40. Second normally closed shut-off valve 62 is arranged in series with first normally closed shut-off valve 60, and fluidly connected to charge air system 13, for example, upstream of a compressor, at a release inlet of a charge air cooler, or at a release inlet of charge air manifold 19. Bleed valve 64 may be fluidly interconnected between the fluid connection of first normally closed shut-off valve 60 and second normally closed shut-off valve 62 and venting line 43.

One skilled in the art will appreciate that additional release valve unit 56 may be formed as a double block and bleed valve comprising a first normally closed shut-off valve, a second normally closed shut-off valve and a bleed valve.

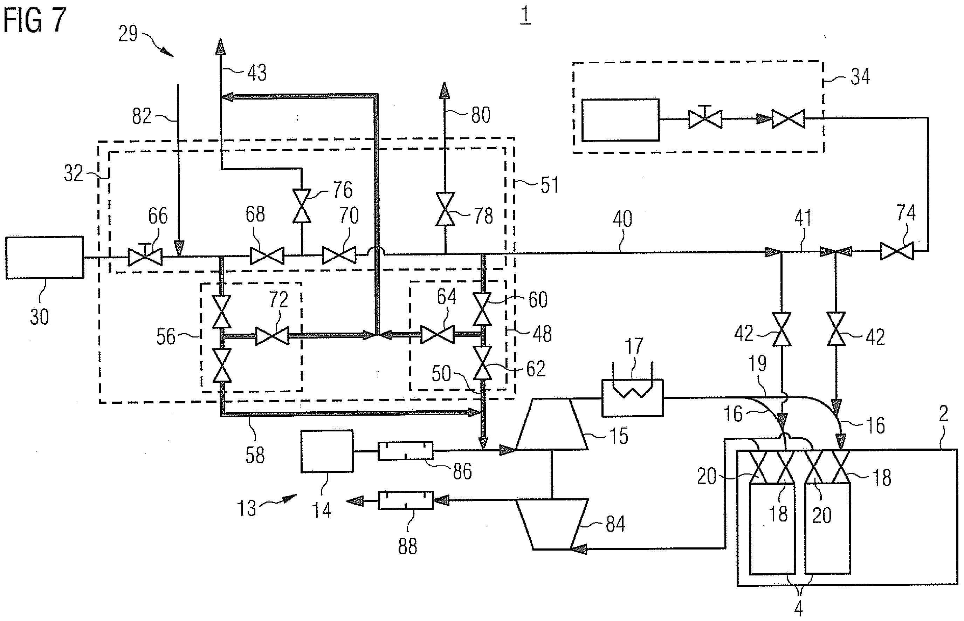

Referring now to Fig. 7, an exemplary arrangement of dual fuel internal combustion engine 1 is shown. Elements already described in connection with one of Figs. 1 to 6 have the same reference numeral.

Gaseous fuel source 30 is fluidly connected to a main control valve 66 controlling flow of gaseous fuel. Downstream of main control valve 66, a first main shut-off valve 68 and a second main shut-off valve 70 are arranged in series. Both first main shut-off valve 68 and second main shut-off valve 70 are adapted to allow or to block flow of gaseous fuel into gaseous fuel line 40.

The shown embodiment comprises a release line 50 and an additional release line 58, both release line 50 and additional release line 58 fluidly connecting gaseous fuel system 29 to charge air system 13.

Specifically, release line 50 is fluidly interconnected between gaseous fuel line 40 and an intake of compressor 15. Release valve unit 48 is configured as described in connection with Fig. 6. That is, release valve unit 48 includes a first shut-off valve 60, a second shut-off valve 62, and a bleed valve 64. Bleed valve 64 is fluidly connected to venting line 43.

Similarly, additional release valve unit 56 is configured as a double block and bleed valve, and the additional bleed valve 72 of additional release valve unit 56 is fluidly connected to venting line 43.

As can be seen, gas valve unit 32, release valve unit 48 and additional release valve unit 56 together form a gas valve unit arrangement 51 which may be configured as a module being separately arranged from engine block 2 and charge air system 13.

For safety reasons, a bleed line 80 with a safety bleed valve 78 is fluidly connected to gaseous fuel line 40. However, during normal operation, remaining gaseous fuel in gaseous fuel line 40 is released via release line 50 to charge air system 13 when receiving information that the gaseous fuel mode is stopped as is described in greater detail later on.

Gas valve unit 32 further comprises a pressurised inert gas line 82 guiding pressurised inert gas into the fluid connection between main control valve 66 and first main shut-off valve 68 to release remaining gaseous fuel if GFM is stopped. Furthermore, a venting valve 76 is installed in venting line 43.

Pressurised inert gas system 34 is connected to gaseous fuel manifold 41 via pressurised inert gas valve 74 adapted to allow or restrict flow pressurised inert gas into gaseous fuel manifold 41.

Compressor 15 is drivingly coupled to a turbine 84 being driven by exhaust gas released from cylinders 4 via respective outlet valves 20. Furthermore, a charge air silencer 86 and an exhaust gas silencer 88 are part of dual fuel internal combustion engine 1.

### Industrial Applicability

In the following the operation of dual fuel internal combustion engine 1 is described in connection with Figs. 1 to 6.

Dual fuel internal combustion engine 1 may be operated with different kinds of fuels such as heavy fuel oil (HFO), diesel fuel, gasoline, and natural gas. Specifically, dual fuel internal combustion engine 1 may be operated in either a LFM, for example a diesel fuel mode, and a GFM, for example a natural gas mode.

For the LFM, charge air system 13 provides compressed charge air pressurised by compressor 15 to combustion chamber 6, wherein the compressed charge air is further compressed by piston 8 moving towards a top dead center (TDC) of cylinder 4. Liquid fuel injection system 28 provides liquid fuel to compressed charge air within combustion chamber 6, where the charge air/liquid fuel mixture is ignited due to self ignition of the liquid fuel caused by high pressure and temperature within combustion chamber 6.

For the GFM, a gaseous fuel such as natural gas is supplied by gaseous fuel source 30 of gaseous fuel system 29. Gas valve unit 32 allows flow of gaseous fuel into gaseous fuel line 40. Gaseous fuel admission valve 42 doses gaseous fuel into compressed charge air supplied by charge air system 13 and passing inlet port 16, thereby, producing a charge air - gaseous fuel mixture. Said mixture enters combustion chamber 6 through opened inlet valve 18, is compressed by piston 8 moving towards TDC of cylinder 4, and ignited by a small amount of ignition fuel, for example, diesel fuel, that is injected into combustion chamber 6 by liquid fuel injection system 28. Due to the high pressure and temperature within combustion chamber 6, the ignition fuel instantaneously ignites, and, thereby, also ignites the compressed charge air - gaseous fuel mixture within combustion chamber 6. The amount of ignition fuel may be, for example, within the range of 0.5 % to 5 % of the fuel amount injected during LFM.

For both LFM and GFM, after combustion of the air fuel mixture in combustion chamber 6, exhaust gas leaves combustion chamber 6 through opened outlet valve 20 via outlet port 22 to exhaust gas system 24.

In the following, functionality and operation of control unit 46 is described. The method steps disclosed hereinafter may be performed when stopping operation of GFM, or when switching from GFM to LFM. In the case of switching from GFM to LFM, LFM has to be available, for example, liquid fuel in a sufficient amount may be present in liquid fuel tank unit 26 to allow operation in LFM.

Initially, dual fuel internal combustion engine operates in GFM. That is, gaseous fuel source 30 supplies gaseous fuel. The supplied gaseous fuel passes opened gas valve unit 32 (for example, opened by control unit 46) and gaseous fuel line 40 towards gaseous fuel admission valve 42. Gaseous fuel admission valve doses the supplied gaseous fuel into compressed charge air in inlet port 16. It is noted that during GFM, release valve unit 48 is in a closed state such that gaseous fuel within gaseous fuel line 40 is not allowed to flow into charge air system 13 via release line 50.

When switching from GFM to LFM or if switching off dual fuel internal combustion engine 1 from GFM, supply of gaseous fuel is stopped. In particular, control unit 46 may cause gas valve unit 32 to block flow from gaseous fuel source 30 to gaseous fuel line 40. One skilled in the art will appreciate that a pressure in gaseous fuel line 40 decreases if no more gaseous fuel is supplied as long as gaseous fuel admission valve 42 continues to dose gaseous fuel into compressed charge air in inlet port 16. At a certain point, a preset pressure difference across gaseous fuel admission valve 42 may be undercut which may result in a control signal being provided to control unit 46. Gaseous fuel admission valve 42 is then switched to a closed position by control unit 46.

Further, control unit 46 provides a control signal to release valve unit 48 (in the configuration shown in Fig. 1). Said control signal causes release valve unit 48 to open and, thereby, allowing gaseous fuel from gaseous fuel line 40 to be released to charge air system 13. Depending on the configuration, release line 50 may guide remaining gaseous fuel from gaseous fuel line 40 to, for example, a charge air line upstream of compressor 15 (see Fig. 2), or to a release inlet of charge air cooler 17 (see Fig. 3). In the exemplary embodiment of release valve unit 48 shown in Fig. 6, both shut-off valves 60, 62 may be opened, whereas bleed valve 64 is closed.

Released remaining gaseous fuel from the gaseous fuel line 40 now mixes with uncompressed charge air in charge air system 13, thereby forming a charge air/gaseous fuel release mixture. In the configuration of Fig. 2, the mixture is compressed by compressor 15 and further guided via charge air cooler 17 and charge air manifold 19 to combustion chamber 6. In combustion chamber 6, the mixture is combusted with liquid fuel to power dual fuel internal combustion engine 1. In other embodiments, remaining gaseous fuel may be released into precompressed or compressed charge air upstream of the cylinder specific charge air/gaseous fuel mixing zones.

To cause the remaining gaseous fuel in gaseous fuel line 40 to flow via release line 50 into charge air system 13 to mix with charge air, control unit 46 may cause pressurised inert gas system 34 to supply pressurised inert gas to gaseous fuel line 40 if gaseous fuel supply is stopped. One skilled in the art will appreciate, that if releasing remaining gaseous fuel into a section of charge air system 13 downstream of compressor 15, pressurised inert gas system may pressurise gaseous fuel line 40 to cause a sufficient pressure difference between gaseous fuel line 40 and an compressed section of charge air system 13 to facilitate flow of remaining gaseous fuel into compressed charge air.

In some embodiments, a release time since the beginning of the release of remaining gaseous fuel from gaseous fuel line 40 to charge air system 13 via release line 50 may be measured, for example, by timer 52. The release of remaining gaseous fuel may be stopped if a measured release time reaches a preset time period. That is, timer 52 may provide a control signal to control unit 46 indicating that a preset time is elapsed causing control unit 46 to provide a control signal to release valve unit 48 causing release valve unit 48 to close.

In some embodiments, alternatively or additionally, a gas concentration of at least one of gaseous fuel, inert gas, and charge air may be measured by gas concentration sensor 54. Control unit 46 is further configured to close release valve unit 48 if a respective concentration threshold is reached. The respective concentration threshold may be stored in a memory of control unit 46. By closing release valve unit 48, the release of remaining gaseous fuel via release line 50 is stopped.

Control unit 46 may further control an amount of injected liquid fuel by the liquid fuel injection system 28 in dependence of a gaseous fuel concentration, an inert gas concentration, a charge air concentration, a time period since opening of the release valve unit, and/or an engine speed. For example, control unit 46 may control the amount of injected fuel by the liquid fuel injection system 28 in that the amount of injected liquid fuel is increased as the gaseous fuel concentration in combustion chamber 6 decreases. The gaseous fuel concentration may decrease because more and more remaining gaseous fuel from gaseous fuel line 40 has been released via release line 50 to charge air system 13, and combusted in combustion chamber 6. In addition, a speed governor may ensure a constant engine speed by controlling the ignition fuel supply via liquid fuel injection system 28. The speed governor may be part of control unit 46, or may be connected to control unit 46.

If it is determined that the remaining gaseous fuel of the gaseous fuel supply lines has been combusted in combustion chamber 6 or remaining gaseous fuel from gaseous fuel line 40 is released, control unit 46 provides control signals to release valve unit 48 and pressurised inert gas system 34, causing release valve unit 48 to block flow via release line 50, and causing pressurised inert gas system 34 to stop supply of pressurised inert gas to gaseous fuel system 29. If remaining gaseous fuel is released from gaseous fuel line 40, dual fuel internal combustion engine 1 may be switch off, or dual fuel internal combustion engine 1 may be further operated in LFM as described above if desired.

As described, determination if the remaining gaseous fuel has been released via release line 50 may be done in various alternative or complementary ways, for example, via timer 52, and/or a gas concentration sensor 54.

To increase the reaction time, a load on dual fuel internal combustion engine 1 may be reduced, for example, by control unit 46. A reduced load on the engine directly implies a reduced fuel consumption.. By reducing engine load, the reaction time to switch valves may be enhanced, for example, when certain pressure levels are reached to switch over from dosing by gaseous fuel admission valves 42 in GFM to release remaining gaseous fuel in gaseous fuel line 40 by opening of release valve unit 48 if receiving information that the gaseous fuel mode is stopped. This procedure may be not necessary when the timing at full load is sufficient.

The exemplary disclosed control system and method for operating a dual fuel internal combustion engine 1 may reduce emission of greenhouse gases to the environment as remaining gaseous fuel in the gaseous fuel supply lines may be combusted by the dual fuel internal combustion engine 1 instead of releasing the remaining fuel through venting lines to the environment. Further, as remaining gaseous fuel is utilized to power dual fuel internal combustion engine 1, the remaining gaseous fuel is not wasted which improves efficiency of dual fuel internal combustion engine 1.

In case of an emergency, it is still possible to vent remaining gaseous fuel to the environment, for example, via venting line 43 and/or bleed line 80 (shown in Fig. 7). The proposed configuration may further ensure that in case of an emergency, remaining gaseous fuel may be further vented off through bleed valve 64 to fasten an emergency release of remaining gaseous fuel.

From a safety point of view, design of release valve units 48, additional release valve unit 56, release line 50, and additional release line 58 should ensure that gaseous fuel flow of remaining gaseous fuel is always at an acceptable level. For example, release line 50 and additional release line 58 may have a reduced line diameter compared to gaseous fuel line 40. Similarly, release valve unit 48 and additional release valve unit 56 may have a reduced flow area in an opened state to limit a gaseous fuel flow therethrough.

It is further noted that similar to control of release valve unit 48 by control unit 46, additional release valve unit 56 may be controlled by control unit 46 in the configuration shown in Fig. 2.

Control unit 46 may be configured to perform the above described method steps, and may be a single microprocessor or plural microprocessors that may include means for controlling, among others, an operation of the various components of dual fuel internal combustion engine 1, for example, inlet valve 18, outlet valve 20, gas valve unit 32, and gaseous fuel admission valve 42. Control unit 46 may be a general engine control unit (ECU) capable of controlling numeral functions associated with dual fuel internal combustion engine 1 and/or its associated components. Control unit 46 may include all the components required to run an application such as, for example, a memory, a secondary storage device, and a processor such as a central processing unit or any other means known in the art for controlling dual fuel internal combustion engine 1 and its various components.

Various other known circuits may be associated with control unit 46, including power supply circuitry, signal-conditioning circuitry, communication circuitry, and other appropriate circuitry. Control unit 46 may analyze and compare received and stored data, and, based on instructions and data stored in memory or input by a user, determine whether action is required. For example, control unit 46 may compare received values with target values stored in memory, and based on the results of the comparison, control unit 46 may transmit signals to one or more components to alter the operation status thereof.

Control unit 46 may include any memory device known in the art for storing data relating to operation of dual fuel internal combustion engine 1 and its components. The data may be stored in the form of one or more maps that describe and/or relate, for example, valve opening timing. Each of the maps may be in the form of tables, graphs, and/or equations, and include a compilation of data collected from lab and/or field operation of the dual fuel internal combustion engine 1. The maps may be generated by performing instrumented tests on the operation of the dual fuel internal combustion engine 1 under various operating conditions while varying parameters associated therewith. Control unit 46 may reference these maps and control operation of one component in response to the desired operation of another component.

As used herein, the term "connected" used in connection with the control unit refers to the presence of a control connection line and the ability of the control unit to control operation of a connected component, and/or receive control signals or measured values from a connected component.

Further, herein, the term "dual fuel internal combustion engine" may refer to internal combustion engines which may be used as main or auxiliary engines of stationary power providing systems such as power plants for production of heat and/or electricity as well as in ships/vessels such as cruiser liners, cargo ships, container ships, tankers, and other vehicles. Fuels for internal combustion engines may include diesel oil, marine diesel oil, heavy fuel oil, alternative fuels or a mixture thereof, and natural gas.

Although the preferred embodiments of this invention have been described herein, improvements and modifications may be incorporated without departing from the scope of the following claims.

## Claims

1. A method for operating a dual fuel internal combustion engine (1) having a gaseous fuel system (29) and configured to operate in a gaseous fuel mode and a liquid fuel mode, the method comprising:
operating the dual fuel internal combustion engine (1) in the gaseous fuel mode by supplying gaseous fuel to charge air at cylinder specific charge air/gaseous fuel mixing zones, thereby forming a cylinder specific charge air/gaseous fuel mixture;
stopping supply of gaseous fuel to the cylinder specific charge air/gaseous fuel mixing zones;
releasing remaining gaseous fuel from the gaseous fuel system (29) to the charge air upstream of the cylinder specific charge air/gaseous fuel mixing zones, thereby forming a charge air/gaseous fuel release mixture;
supplying a pressurised inert gas to the gaseous fuel system (29) to cause remaining gaseous fuel from the gaseous fuel system (29) to flow into the charge air;
combusting the charge air/gaseous fuel release mixture with liquid fuel.

2. The method of claim 1, wherein the method step of releasing remaining gaseous fuel from the gaseous fuel line (40) into charge air comprises releasing remaining gaseous fuel into uncompressed, precompressed or compressed charge air.

3. The method of any one of the preceding claims, further comprising:
measuring a release time since the beginning of the release of remaining gaseous fuel into the charge air, and
stopping the release of remaining gaseous fuel if a measured release time reaches a preset time period.

4. The method of any one of the preceding claims, further comprising:
measuring a gas concentration of at least one of gaseous fuel, inert gas, and charge air; and
stopping the release of remaining gaseous fuel if a measured gas concentration reaches a respective gas concentration threshold.

5. The method of any one of the preceding claims, wherein the method step of combusting the charge air/gaseous fuel release mixture with liquid fuel comprises increasing supply of liquid fuel to the combustion.

6. The method of any one of the preceding claims, further comprising:
switching the dual fuel internal combustion engine (1) to the liquid fuel mode if remaining gaseous fuel is released from the gaseous fuel line (40); or
switch off operation of the dual fuel internal combustion engine (1) if remaining gaseous fuel is released from the gaseous fuel line (40).

7. A control system (44) for a dual fuel internal combustion engine (1) configured to operate in a liquid fuel mode and in a gaseous fuel mode, the dual fuel internal combustion engine (1) comprising a gaseous fuel system (29) and a charge air system (13), the control system (44) comprising:
a release line (50) for fluidly connecting the gaseous fuel system (29) to the charge air system (13);
a release valve unit (48) in the release line (50); and
a control unit (46) connected to the release valve unit (48) and configured to open the release valve unit (48) when receiving information that the gaseous fuel mode is stopped such that remaining gaseous fuel from the gaseous fuel system (29) is releasable via the release line (50) into the charge air in the charge air system (13) and connected to an inert gas valve (36) and configured to control operation of the inert gas valve (36).

8. The control system (44) of claim 8, wherein the control system (44) further comprises a gas concentration sensor (54) for measuring at least one of a gaseous fuel concentration, an inert gas concentration, a charge air concentration, the gas concentration sensor (54) being connected to the control unit (46) and provided in at least one of the gaseous fuel system (29), the release line (50), and the charge air system (13), and the control unit (46) is further configured to close the release valve unit (48) if a respective concentration threshold is reached.

9. The control system (44) of claim 8 or claim 9, wherein the control system (44) further comprises a timer (52) connected to the control unit (46), and the control unit (46) is further configured to close the release valve unit (48) if a preset time period since opening of the release valve unit (48) is elapsed.

10. A dual fuel internal combustion engine (1) configured to operate in a liquid fuel mode and in a gaseous fuel mode, comprising:
at least one cylinder (4), each cylinder comprising an inlet port (16);
a gaseous fuel system (29) fluidly connected to each inlet port (16) via a gaseous fuel admission valve (42);
a charge air system (13) fluidly connected to each inlet port (16); and
a control system (44) according to any one of claims 7 to 9, wherein the release line (50) fluidly connects the gaseous fuel system (29) to the charge air system (13).

11. The dual fuel internal combustion engine (1) of claim 10, further comprising at least one compressor (15), a charge air cooler (17), and a charge air manifold (19), and
wherein the release line (50) is fluidly connectable to the charge air system (13) upstream and/or downstream of the at least one compressor (15), upstream of the charge air manifold (19), directly connectable to the charge air cooler (17), and/or directly connectable to the charge air manifold (19).

12. The dual fuel internal combustion engine (1) of claim 10 or claim 11, further comprising
a pressurised inert gas system (34) fluidly connected to the gaseous fuel system (29), and wherein the control unit (46) is connected to the pressurised inert gas system (34) and configured to control flow of pressurised inert gas from the pressurised inert gas system (34) into the gaseous fuel system (29) when receiving information that the gaseous fuel mode is stopped such that remaining gaseous fuel from the gaseous fuel system (29) is caused to flow via the release line (50) into charge air in the charge air system (13).

13. The dual fuel internal combustion engine (1) of any one of claim 10 to claim 12, further comprising a liquid fuel injection system (28), and wherein the control unit (46) is connected to the liquid fuel injection system (28) to control an amount of injected liquid fuel by the liquid fuel injection system (28) in dependence of a gaseous fuel concentration, an inert gas concentration, a time period since opening of the release valve unit (48), and/or an engine speed.

14. The dual fuel internal combustion engine (1) of any one of claim 10 to claim 12, wherein the gaseous fuel system (29) further comprises a venting line (43) for venting of gaseous fuel, and wherein the release valve unit (48) is formed as a double block and bleed valve which comprises a first normally closed shut-off valve (60) fluidly connected to the gaseous fuel system (29), a second normally closed shut-off valve (62) arranged in series with the first normally closed shut-off valve (60), and fluidly connected to the charge air system (13); and a bleed valve (64) fluidly interconnected between the fluid connection of the first normally closed shut-off valve (60) and the second normally closed shut-off valve (62) and the venting line (43).

## Patentansprüche

1. Verfahren zum Betreiben eines Zweistoff-Verbrennungsmotors (1), der ein Gaskraftstoffsystem (29) aufweist und ausgelegt ist, in einem Gaskraftstoffmodus und einem Flüssigkraftstoffmodus zu arbeiten, wobei das Verfahren umfasst:
Betreiben des Zweistoff-Verbrennungsmotors (1) in dem Gaskraftstoffmodus durch Zuführen von Gaskraftstoff zu Ladeluft in zylinderspezifischen Ladeluft/Gaskraftstoff-Mischzonen, wodurch ein zylinderspezifisches Ladeluft/Gaskraftstoff-Gemisch gebildet wird;
Stoppen der Zufuhr von Gaskraftstoff zu den zylinderspezifischen Ladeluft/Gaskraftstoff-Mischzonen;
Freisetzen von verbleibendem Gaskraftstoff aus dem Gaskraftstoffsystem (29) in die Ladeluft stromaufwärts von den zylinderspezifischen Ladeluft/Gaskraftstoff-Mischzonen, wodurch ein Ladeluft/Gaskraftstoff-Freisetzungsgemisch gebildet wird;
Zuführen eines Druckinertgases zu dem Gaskraftstoffsystem (29), um zu bewirken, dass verbleibender Gaskraftstoff aus dem Gaskraftstoffsystem (29) in die Ladeluft strömt;
Verbrennen des Ladeluft/Gaskraftstoff-Freisetzungsgemischs mit Flüssigkraftstoff.

2. Verfahren nach Anspruch 1, wobei der Verfahrensschritt des Freisetzens von verbleibendem Gaskraftstoff aus der Gaskraftstoffleitung (40) in Ladeluft ein Freisetzen von verbleibendem Gaskraftstoff in nicht-komprimierte, vorkomprimierte oder komprimierte Ladeluft umfasst.

3. Verfahren nach einem der vorhergehenden Ansprüche, ferner umfassend:
Messen einer Freisetzungszeit seit dem Beginn der Freisetzung von verbleibendem Gaskraftstoff in die Ladeluft; und
Stoppen der Freisetzung von verbleibendem Gaskraftstoff, wenn eine gemessene Freisetzungszeit eine voreingestellte Zeitperiode erreicht.

4. Verfahren nach einem der vorhergehenden Ansprüche, ferner umfassend:
Messen einer Gaskonzentration von mindestens einem von Gaskraftstoff, Inertgas und Ladeluft; und
Stoppen der Freisetzung von verbleibendem Gaskraftstoff, wenn eine gemessene Gaskonzentration eine jeweilige Gaskonzentrationsschwelle erreicht.

5. Verfahren nach einem der vorhergehenden Ansprüche, wobei der Verfahrensschritt des Verbrennens des Ladeluft/Gaskraftstoff-Freisetzungsgemischs mit Flüssigkraftstoff ein Erhöhen der Zufuhr von Flüssigkraftstoff zur Verbrennung umfasst.

6. Verfahren nach einem der vorhergehenden Ansprüche, ferner umfassend:
Schalten des Zweistoff-Verbrennungsmotors (1) in den Flüssigkraftstoffmodus, wenn verbleibender Gaskraftstoff aus der Gaskraftstoffleitung (40) freigesetzt wird; oder
Ausschalten des Betriebs des Zweistoff-Verbrennungsmotors (1), wenn verbleibender Gaskraftstoff aus der Gaskraftstoffleitung (40) freigesetzt wird.

7. Steuersystem (44) für einen Zweistoff-Verbrennungsmotor (1), der ausgelegt ist, in einem Flüssigkraftstoffmodus und in einem Gaskraftstoffmodus zu arbeiten, wobei der Zweistoff-Verbrennungsmotor (1) ein Gaskraftstoffsystem (29) und ein Ladeluftsystem (13) umfasst, wobei das Steuersystem (44) umfasst:
eine Freisetzungsleitung (50), um das Gaskraftstoffsystem (29) mit dem Ladeluftsystem (13) fluidisch zu verbinden;
eine Freisetzungsventileinheit (48) in der Freisetzungsleitung (50); und
eine Steuereinheit (46), die mit der Freisetzungsventileinheit (48) verbunden ist und ausgelegt ist, die Freisetzungsventileinheit (48) zu öffnen, wenn Informationen empfangen werden, dass der Gaskraftstoffmodus gestoppt wird, so dass verbleibender Gaskraftstoff aus dem Gaskraftstoffsystem (29) über die Freisetzungsleitung (50) in die Ladeluft in dem Ladeluftsystem (13) freisetzbar ist, und die mit einem Inertgasventil (36) verbunden ist und ausgelegt ist, den Betrieb des Inertgasventils (36) zu steuern.

8. Steuersystem (44) nach Anspruch 8, wobei das Steuersystem (44) ferner einen Gaskonzentrationssensor (54) zum Messen mindestens einer von einer Gaskraftstoffkonzentration, einer Inertgaskonzentration, einer Ladeluftkonzentration umfasst, wobei der Gaskonzentrationssensor (54) mit der Steuereinheit (46) verbunden ist und in mindestens einem von dem Gaskraftstoffsystem (29), der Freisetzungsleitung (50) und dem Ladeluftsystem (13) bereitgestellt ist, und wobei die Steuereinheit (46) ferner ausgelegt ist, die Freisetzungsventileinheit (48) zu schließen, wenn eine jeweilige Konzentrationsschwelle erreicht ist.

9. Steuersystem (44) nach Anspruch 8 oder Anspruch 9, wobei das Steuersystem (44) ferner einen Zeitgeber (52) umfasst, der mit der Steuereinheit (46) verbunden ist, und wobei die Steuereinheit (46) ferner ausgelegt ist, die Freisetzungsventileinheit (48) zu schließen, wenn eine voreingestellte Zeitperiode seit dem Öffnen der Freisetzungsventileinheit (48) verstrichen ist.

10. Zweistoff-Verbrennungsmotor (1), welcher ausgelegt ist, in einem Flüssigkraftstoffmodus und in einem Gaskraftstoffmodus zu arbeiten, umfassend:
mindestens einen Zylinder (4), wobei jeder Zylinder eine Einlassöffnung (16) aufweist;
ein Gaskraftstoffsystem (29), das mit jeder Einlassöffnung (16) über ein Gaskraftstoffaufnahmeventil (42) fluidisch verbunden ist;
ein Ladeluftsystem (13), das mit jeder Einlassöffnung (16) fluidisch verbunden ist; und
ein Steuersystem (44) nach einem der Ansprüche 7 bis 9, wobei die Freisetzungsleitung (50) das Gaskraftstoffsystem (29) mit dem Luftladesystem (13) fluidisch verbindet.

11. Zweistoff-Verbrennungsmotor (1) nach Anspruch 10, ferner umfassend mindestens einen Kompressor (15), eine Ladeluftkühler (17) und einen Ladeluftverteiler (19), und
wobei die Freisetzungsleitung (50) fluidisch verbindbar ist mit dem Ladeluftsystem (13) stromaufwärts und/oder stromabwärts von dem mindestens einen Kompressor (15), stromaufwärts von dem Ladeluftverteiler (19), direkt verbindbar mit dem Ladeluftkühler (17) und/oder direkt verbindbar mit dem Ladeluftverteiler (19).

12. Zweistoff-Verbrennungsmotor (1) nach Anspruch 10 oder Anspruch 11, ferner umfassend
ein Druckinertgassystem (34), das mit dem Gaskraftstoffsystem (29) fluidisch verbunden ist, und wobei die Steuereinheit (46) mit dem Druckinertgassystem (34) verbunden ist und ausgelegt ist, den Durchfluss von Druckinertgas aus dem Druckinertgassystem (34) in das Gaskraftstoffsystem (29) zu steuern, wenn Informationen empfangen werden, dass der Gaskraftstoffmodus gestoppt wird, so dass bewirkt wird, dass verbleibender Gaskraftstoff aus dem Gaskraftstoffsystem (29) über die Freisetzungsleitung (50) in Ladeluft in dem Ladeluftsystem (13) strömt.

13. Zweistoff-Verbrennungsmotor (1) nach einem von Anspruch 10 bis Anspruch 12, ferner umfassend ein Flüssigkraftstoff-Einspritzsystem (28), und wobei die Steuereinheit (46) mit dem Flüssigkraftstoff-Einspritzsystem (28) verbunden ist, um eine Menge an durch das Flüssigkraftstoff-Einspritzsystem (28) eingespritztem Flüssigkraftstoff in Abhängigkeit von einer Gaskraftstoffkonzentration, einer Inertgaskonzentration, einer Zeitperiode seit dem Öffnen der Freisetzungsventileinheit (48) und/oder einer Motorgeschwindigkeit zu steuern.

14. Zweistoff-Verbrennungsmotor (1) nach einem von Anspruch 10 bis Anspruch 12, wobei das Gaskraftstoffsystem (29) ferner eine Entlüftungsleitung (43) zum Entlüften von Gaskraftstoff umfasst, und wobei die Freisetzungsventileinheit (48) als Doppelabsperr- und Ablassventil gebildet ist, welches umfasst: ein erstes normal geschlossenes Absperrventil (60), das mit dem Gaskraftstoffsystem (29) fluidisch verbunden ist, ein zweites normal geschlossenes Absperrventil (62), das in Serie mit dem ersten normal geschlossenen Absperrventil (60) eingerichtet ist und mit dem Ladeluftsystem (13) fluidisch verbunden ist, und ein Ablassventil (64), das zwischen der Fluidverbindung des ersten normal geschlossenes Absperrventils (60) und des zweiten normal geschlossenen Absperrventils (62) und der Entlüftungsleitung (43) fluidisch angeschlossen ist.

## Revendications

1. Procédé de fonctionnement d'un moteur à combustion interne à double carburant (1) ayant un système de carburant gazeux (29) et configuré pour fonctionner dans un mode à carburant gazeux et un mode à carburant liquide, le procédé comprenant :
le fonctionnement du moteur à combustion interne à double carburant (1) en mode à carburant gazeux en fournissant du carburant gazeux à de l'air de suralimentation dans des zones de mélange d'air de suralimentation/de carburant gazeux spécifiques au cylindre, en formant de la sorte un mélange d'air de suralimentation et de carburant gazeux spécifique au cylindre ;
l'arrêt de la fourniture de carburant gazeux aux zones de mélange d'air de chargement et de carburant gazeux spécifique au cylindre ;
le dégagement de carburant gazeux restant du système de carburant gazeux (29) à l'air de suralimentation des zones de mélange d'air de suralimentation/de carburant gazeux spécifique au cylindre, en formant ainsi un mélange de dégagement d'air de suralimentation/de carburant gazeux ;
la fourniture d'un gaz inerte sous pression au système de carburant gazeux (29) pour amener le carburant gazeux restant du système de carburant gazeux (29) à s'écouler dans l'air de suralimentation ;
la combustion du mélange de dégagement d'air de suralimentation/de carburant gazeux avec du carburant liquide.

2. Procédé selon la revendication 1, dans lequel l'étape de procédé de dégagement de carburant gazeux restant de la conduite de carburant gazeux (40) dans l'air de suralimentation comprend le dégagement de carburant gazeux restant dans de l'air de suralimentation non comprimé, pré-comprimé ou comprimé.

3. Procédé selon l'une quelconque des revendications précédentes, comprenant en outre :
la mesure d'un temps de dégagement depuis le début du dégagement de carburant gazeux restant dans l'air de suralimentation, et
l'arrêt du dégagement du carburant gazeux restant si un temps de dégagement mesuré atteint une période de temps préétablie.

4. Procédé selon l'une quelconque des revendications précédentes, comprenant en outre :
la mesure d'une concentration de gaz d'au moins l'un parmi le carburant gazeux, le gaz inerte, et l'air de suralimentation ; et
l'arrêt du dégagement de carburant gazeux restant si une concentration de gaz mesurée atteint un seuil de concentration de gaz respectif.

5. Procédé selon l'une quelconque des revendications précédentes, dans lequel l'étape de procédé de combustion du mélange de dégagement d'air de suralimentation/de carburant gazeux avec du carburant liquide comprend l'augmentation de la fourniture de carburant liquide à la combustion.

6. Procédé selon l'une quelconque des revendications précédentes, comprenant en outre :
la commutation du moteur à combustion interne à double carburant (1) au mode à carburant liquide si du carburant gazeux restant est dégagé de la conduite de carburant gazeux (40) ; ou
la déconnexion du fonctionnement du moteur à combustion interne à double carburant (1) si du carburant gazeux restant est dégagé de la conduite de carburant gazeux (40).

7. Système de commande (44) pour un moteur à combustion interne à double carburant (1) configuré pour fonctionner dans un mode à carburant liquide et dans un mode à carburant gazeux, le moteur à combustion interne à double carburant (1) comprenant un système de carburant gazeux (29) et un système d'air de suralimentation (13), le système de commande (44) comprenant :
une conduite de dégagement (50) pour raccorder en mode fluidique le système de carburant gazeux (29) au système d'air de suralimentation (13) ;
une unité de soupape de dégagement (48) dans la conduite de dégagement (50) ; et
une unité de commande (46) raccordée à l'unité de soupape de dégagement (48) et configurée pour ouvrir l'unité de soupape de dégagement (48) lors de la réception d'informations indiquant que le mode à carburant gazeux est arrêté de sorte que le carburant gazeux restant du système de carburant gazeux (29) puisse être dégagé via la conduite de dégagement (50) dans l'air de suralimentation du système d'air de suralimentation (13) et raccordé à une soupape à gaz inerte (36) et configuré pour commander le fonctionnement de la soupape à gaz inerte (36).

8. Système de commande (44) selon la revendication 8, dans lequel le système de commande (44) comprend en outre un capteur de concentration de gaz (54) pour mesurer au moins l'une parmi une concentration de carburant gazeux, une concentration de gaz inerte, une concentration d'air de suralimentation, le capteur de concentration de gaz (54) étant raccordé à l'unité de commande (46) et disposé dans au moins l'un(e) parmi le système de carburant gazeux (29), la conduite de dégagement (50), et le système d'air de suralimentation (13), et l'unité de commande (46) est en outre configurée pour fermer l'unité de soupape de dégagement (48) si un seuil de concentration respectif est atteint.

9. Système de commande (44) selon la revendication 8 ou la revendication 9, dans lequel le système de commande (44) comprend en outre une minuterie (52) connectée à l'unité de commande (46), et l'unité de commande (46) est en outre configurée pour fermer l'unité de soupape de dégagement (48) si une période de temps préétablie depuis l'ouverture de l'unité de soupape de dégagement (48) est écoulée.

10. Moteur à combustion interne à double carburant (1) configuré pour fonctionner dans un mode à carburant liquide et dans un mode à carburant gazeux, comprenant :
au moins un cylindre (4), chaque cylindre comprenant un orifice d'entrée (16) ;
un système de carburant gazeux (29) raccordé en mode fluidique à chaque orifice d'entrée (16) via une soupape d'admission de carburant gazeux (42) ;
un système d'air de suralimentation (13) raccordé en mode fluidique à chaque orifice d'entrée (16) ; et
un système de commande (44) selon l'une quelconque des revendications 7 à 9, dans lequel la conduite de dégagement (50) raccorde en mode fluidique le système de carburant gazeux (29) au système d'air de suralimentation (13).

11. Moteur à combustion interne à double carburant (1) selon la revendication 10, comprenant en outre au moins un compresseur (15), un refroidisseur d'air de suralimentation (17), et un distributeur d'air de suralimentation (19), et
dans lequel la conduite de dégagement (50) est raccordable en mode fluidique au système d'air de suralimentation (13) en amont et/ou en aval du au moins un compresseur (15), en amont du distributeur d'air de suralimentation (19), directement raccordable au refroidisseur d'air de suralimentation (17), et/ou directement raccordable au distributeur d'air de suralimentation (19).

12. Moteur à combustion interne à double carburant (1) selon la revendication 10 ou la revendication 11, comprenant en outre
un système de gaz inerte sous pression (34) raccordé en mode fluidique au système de carburant gazeux (29), et dans lequel l'unité de commande (46) est raccordée au système de gaz inerte sous pression (34) et configuré pour commander le flux de gaz inerte sous pression du système de gaz inerte sous pression (34) dans le système de carburant gazeux (29) lors de la réception d'informations indiquant que le mode à carburant gazeux est arrêté de sorte que le carburant gazeux restant du système de carburant gazeux (29) soit amené à s'écouler via la conduite de dégagement (50) dans l'air de suralimentation du système d'air de suralimentation (13).

13. Moteur à combustion interne à double carburant (1) selon l'une quelconque des revendications 10 à 12, comprenant en outre un système d'injection de carburant liquide (28), et dans lequel l'unité de commande (46) est raccordée au système d'injection de carburant liquide (28) pour commander une quantité de carburant liquide injectée par le système d'injection de carburant liquide (28) en fonction d'une concentration de carburant gazeux, d'une concentration de gaz inerte, d'une période de temps depuis l'ouverture de l'unité de soupape de dégagement (48), et/ou d'une vitesse du moteur.

14. Moteur à combustion interne à double carburant (1) selon l'une quelconque des revendications 10 à 12, dans lequel le système de carburant gazeux (29) comprend en outre une conduite d'évacuation (43) pour évacuer le carburant gazeux, et dans lequel l'unité de soupape de dégagement (48) se présente sous la forme d'une soupape double de blocage et d'échappement qui comprend une première soupape d'arrêt normalement fermée (60) raccordée en mode fluidique au système de carburant gazeux (29), une seconde soupape d'arrêt normalement fermée (62) agencée en série avec la première soupape d'arrêt normalement fermée (60), et raccordée en mode fluidique au système d'air de suralimentation (13) ; et une soupape d'échappement (64) interconnectée en mode fluidique entre le raccord de fluide de la première soupape d'arrêt normalement fermée (60) et de la seconde soupape d'arrêt normalement fermée (62) et la conduite d'évacuation (43).
